(19) Europäisches Patentamt
European Patent Office
Office européen des brevets

(11) **EP 3 927 667 B1**

(12) **EUROPEAN PATENT SPECIFICATION**

(45) Date of publication and mention
of the grant of the patent:
**02.04.2025 Bulletin 2025/14**

(21) Application number: **20705085.7**

(22) Date of filing: **20.02.2020**

(51) International Patent Classification (IPC):
*C02F 1/66* (2023.01)     *F01N 3/08* (2006.01)
*B65G 53/30* (2006.01)    *C02F 1/68* (2023.01)
*C02F 101/10* (2006.01)   *C02F 101/20* (2006.01)
*C02F 103/00* (2006.01)   *C02F 103/18* (2006.01)

(52) Cooperative Patent Classification (CPC):
**C02F 1/687; B01F 23/54; B01F 23/565;**
**B01F 25/102; B01F 25/31243; C02F 1/66;**
**F01N 3/04; F01N 3/085;** C02F 2101/101;
C02F 2101/20; C02F 2103/008; C02F 2103/18;
C02F 2201/001; C02F 2301/026; Y02T 10/12

(86) International application number:
**PCT/EP2020/054530**

(87) International publication number:
**WO 2020/169760 (27.08.2020 Gazette 2020/35)**

(54) **METHOD FOR THE REMOVAL OF AT LEAST ONE CONTAMINANT FROM AN AQUEOUS LIQUOR OR A GAS**

VERFAHREN ZUR ENTFERNUNG MINDESTENS EINER VERUNREINIGUNG AUS EINER WÄSSRIGEN FLÜSSIGKEIT ODER EINEM GAS

PROCÉDÉ D'ÉLIMINATION D'AU MOINS UN CONTAMINANT D'UNE LIQUEUR AQUEUSE OU D'UN GAZ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.02.2019 EP 19158786**

(43) Date of publication of application:
**29.12.2021 Bulletin 2021/52**

(73) Proprietor: **SOLVAY SA**
**1120 Bruxelles (BE)**

(72) Inventors:
• **COUDRY, Eric**
**54110 Crevic (FR)**

• **BEDEL, Sabrina**
**54110 Dombasle Sur Meurthe (FR)**
• **DAVOINE, Perrine**
**1020 Bruxelles (BE)**
• **DELPLANCHE, Thierry**
**1435 Mont-St-Guibert (BE)**

(74) Representative: **Kraus & Lederer PartGmbB**
**Thomas-Wimmer-Ring 15**
**80539 München (DE)**

(56) References cited:
WO-A1-2014/135509     WO-A1-2017/194645
US-A- 4 884 925        US-A- 5 195 851
US-A- 5 269 636        US-A1- 2004 197 154

## Description

### CROSS-REFERENCE TO RELATED APPLICATIONS

This application claims the priority of the patent application filed on February 22, 2019 in Europe with Nr. 19158786.4, the whole content of this application being incorporated herein by reference for all purposes.

### TECHNICAL FIELD

The invention relates to a method for removing contaminants from an aqueous liquor or a gas, and more particularly to a method for removing contaminants such as sulphur dioxides ($SO_x$), organics, non-metals and/or metals originating for instance from marine engine exhaust gases.

### BACKGROUND ART

Fossil fuels contain sulphur, which during combustion forms gaseous sulphur oxides, $SO_x$. The amounts of $SO_x$ in fuel exhausts vary according to natural differences in the sulphur content of fuels. The dominant constituent, making up more than 95% of the $SO_x$ emission from combustion of fossil fuel, is sulphur dioxide, $SO_2$. $SO_2$ is a toxic gas, directly harmful for both fauna and flora. A secondary effect of $SO_2$ emission to the atmosphere is formation of sulphate aerosols and a third well recognized result of $SO_2$ emissions is acid rain. Ship emissions are regulated internationally by the IMO (International Maritime Organization) and must comply with the limits prescribed in revised Annex VI of MARPOL in January 2015 in particular. To meet existing and upcoming regulations on reduced sulphur oxide emissions, worldwide limits on the sulphur content of marine fuel are established. Marine fuel with a maximum sulphur content of 0.1% only is allowed in Sulphur Emission Control Areas started in 2015 and as of 2020, or alternatively as of 2025 depending on the availability of fuel, a 0.5% sulphur limit will apply worldwide.

However, there is limited availability of natural low sulphur fuels and the refinery process for desulphurization is costly and energy demanding. Additionally, fuels with the required low sulphur levels are significantly more expensive than those previously used. This serves as a great incentive to install pollution control devices for the removal of constituents from the exhaust gas after the combustion process and as a potential sustainable cheaper alternative to the use of low sulphur fuels in order to achieve the required emission limits. Exhaust gas after-treatment units called scrubbers can be utilized to reduce air pollutant emissions to an appropriate level. Certain Flue Gas Desulphurization (FGD) or scrubber techniques are being adapted from their usual land-based applications to marine applications. So-called exhaust gas scrubbers or just scrubbers seem promising for applications onboard ships.

A particular challenge for the adoption of land-based scrubbers to marine applications is the changing legislative requirements and also changing conditions when a ship sails through different waters such as in the established Emission Control Areas (ECA) with more strict $SO_2$ emission levels. From 2015, ships are not allowed to emit more $SO_2$ than corresponding to 0.1% sulphur in the fuel oil within emission controlled areas. Outside emission controlled areas, the limit is 3.5% sulphur until 2020 and 0.5% sulphur after 2020. Contrary to land-based installations, this means that a scrubber must be much more efficient when a ship enters an emission controlled area as well as that adjustments must be implemented to cope with changing seawater alkalinity (in case of a seawater scrubber), seawater temperature and engine load.

The cleaning effect in the exhaust gas scrubbers results from the fact that the combustion exhaust gases from the engine are passed through a purification medium. This can be seawater, fresh water or dry granules. The majority of the exhaust constituents is dissolved or reacts chemically with the ingredients of the water or the granules and is removed from the exhaust gas stream. The sulphur dioxide from the exhaust gas dissolves in water to form sulphurous acid ($H_2SO_3$). This sulphurous acid decomposes in solution into bisulphite/sulphite ($HSO_3^-/SO_3^{2-}$) and, if oxidation occurs, sulphates ($HSO_4^-/SO_4^{2-}$).

Scrubbers are divided according to two principles into wet and dry systems.

Wet scrubbers use ambient water (seawater) or water processed on board (fresh water) as cleaning media. Manufacturers use different construction systems for the scrubbing process. However, the principle is always the same: the exhaust gas is brought into contact with the water to initiate the cleaning process. The larger the surface of the water as a reaction surface, the more efficient the scrubbing process. The resulting wastewater is passed through a water purifier which eliminates the particles and partially oily residues.

In open systems, it is known technology to treat waste gases with seawater. The pH of surface seawater usually ranges from 8.1 to 8.9 and this natural alkalinity neutralizes absorbed sulphur dioxide. With absorption in seawater, the $SO_2$ will mainly end as bisulphite and sulphate in the water. Seawater is pumped directly into the purification levels. After the separation of oily solids the wastewater from the scrubbing process is diluted with seawater until it meets the adequate pH limits for wastewater discharges.

Closed systems use treated washwater which is run in a circuit independent of the ambient water. To keep the buffer capacity of the water constant, it is supplemented with an alkaline solution, usually sodium hydroxide (NaOH). The enrichment of the processing water with sodium hydroxide solution requires a 20°C - 60°C tempered tank for NaOH and a monitoring unit that adds NaOH corresponding to the pH of the cleaning water

Hybrid systems combine the open and closed wet system. Seawater is used as washwater, which can be pumped directly into the sea in open mode. If necessary, it can be operated in closed mode with the addition of a buffering solution and without discharge of wastewater. The wastewater is collected in holding tanks and released in the port or into the open sea later on.

In open system, seawater is used and no neutralization chemicals, like NaOH, are required onboard the ship. The main disadvantages of an open system are that a very high water flow is required due to a limited seawater alkalinity and that seawater is relatively corrosive, whereby the costs of the scrubber construction material increases. Some operators of hybrid scrubbers use freshwater when they switch from open to closed loop; they reduce the seawater volume and supplement with freshwater, so the final loop contains a mixture of residual seawater and freshwater). Other operators continue using seawater and add the alkali additive when they switch from open to close loop however with less efficacy as if they were switching to freshwater in closed loop.

When running in closed-loop mode, up to now the supplemented alkaline additive has been in form of a solution generally a 50wt% caustic soda solution which applies to both closed-loop and hybrid configurations. Sodium bicarbonate or carbonate solutions could be used too, however the solubility limit of these alkali additives is much less than NaOH. To keep a similar weight content in the liquid, the additive would be in slurry form which may lead to settling and handling issues. The alkali additive could be used in powder form instead of a concentration solution. Taken aboard dry and loaded into a silo, the powder can be mixed with fresh or desalinated water before entering the closed-loop circuit. One of the benefits in using a powder instead of a concentrated solution is the reduction of the risks involved when handling a very alkaline caustic soda and cost effectiveness since the powder additives are less expensive than the concentrated caustic soda solution yielding a reduction in operating costs that offsets the equipment investment.

However the dissolution of the alkaline powder does require freshwater, purified water, or cleaned water which is in short supply on board.

Using a solid alkali additive on a seaboard vessel instead of a concentrated alkali solution though necessitates the transfer of the dry alkaline material from a container or big bag to the scrubber and dispersing the dry alkaline material into the water to be treated.

Eductors have been used and are still used to transfer dry chemicals as a slurry, solution or solid. For example, liquid driven eductors have been used to slurry dry polymers and activated carbon in the water treatment industry and to transfer fly ash in the electric power industry. Also air, steam, and liquid driven eductors have been used for transfer of solids. However, problems are known to exist with eductor-based handling systems.

Liquid driven eductors can be used to transfer dry chemicals from a container, forming a solution or slurry of the chemical in the liquid carrier medium. Liquid driven eductors are known to be successfully used to prepare dilute solutions of polymer in water as well as to transfer insoluble materials, e.g., activated carbon, to storage as a slurry.

However, in tests using concentrated solutions of a solid alkali material like soda ash that is hydratable in water as the motive fluid to convey such solid or using water as the motive fluid to convey a solid hydratable alkali reagent (e.g., soda ash), the throat of the eductor or the eductor itself can rapidly get plugged with hydrates making frequent cleaning necessary.

Hence, there is still a need to develop a method for preparing a slurry or solution from a solid alkali reagent for treatment of an aqueous liquid or a gas to remove contaminants therefrom. Such method would be particularly useful for the removal of contaminants such as $SO_x$, organics, non-metals and/or metals originating for instance from an exhaust gas effluent, preferably from marine engine exhaust gases carried out on board of a seaborne vessel.

## SUMMARY OF INVENTION

Accordingly, the present invention relates to a method for the removal of at least one contaminant from an aqueous liquor or a gas, comprising:

- preparing a solution or slurry of a solid alkali reagent by, supplying a solid alkali reagent into a pre-wetting chamber via a solid feed pipe, preferably positioned at the top of this chamber;
- supplying a liquid via two or more liquid sidestreams, each through a liquid inlet positioned on a side wall of the chamber to allow the liquid sidestreams to wash an internal wall of a frusto-conical section of the chamber and flow downward towards a fluid outlet of the chamber and to further wet the solid alkali reagent with the supplied liquid thereby forming a pre-wetted reagent, wherein the pre-wetted reagent exits the chamber via a fluid outlet which is connected to a conduit comprising an eductor;
- flowing a stream though the conduit thereby creating a suction by the eductor to draw the pre-wetted reagent out of the solid feed pre-wetting chamber toward the chamber fluid outlet and mixing the pre-wetted reagent with the stream to form a slurry or solution of the alkali reagent exiting the eductor;

  directing at least a portion of the slurry or solution of the alkali reagent exiting the eductor to an aqueous liquor or a gas treatment unit, preferably via a circulation loop in fluid communication with the treatment unit, and
  removing at least a portion of the contaminant from the aqueous liquor or gas in the treatment unit.

In the method of the present invention, the contaminants can be $SO_x$, organics, non-metals and/or metals. In the method of the present invention, the contaminant can originate from an exhaust gas, particularly originate from a marine engine exhaust gas. In the method of the present invention, the alkali reagent is used to remove at least a portion of the contaminants from the aqueous liquor or gas.

In a particular embodiment of the present invention, contaminants such as organics, non-metals and/or metals are removed from an aqueous liquor. In that case, the most preferred alkali reagent is a material comprising hydroxyapatite and/or brushite, most often comprising hydroxyapatite.

The aqueous liquor or gas is preferably treated in a treatment unit hydraulically connected to a circulation loop. The method for the removal of at least one contaminant advantageously comprises dispersing a solid alkali reagent using at least part of the aqueous liquor from the circulation loop to form a slurry or solution of the alkali reagent and then directing the slurry or solution of the alkali reagent to the treatment unit to remove at least a portion of the contaminants.

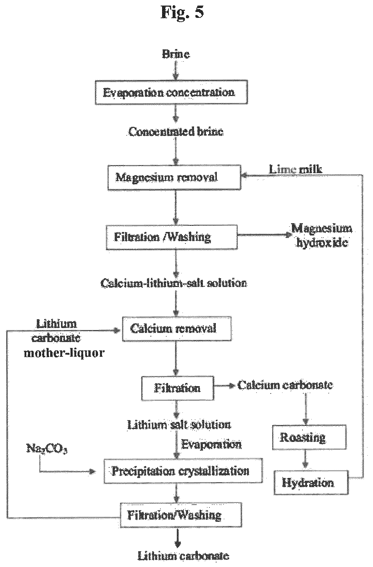

The process of the invention allows to inject a solution or slurry of sodium carbonate into a lithium carbonate production process from brine, as shown in **Figure 5**. In that case, the alkali reagent is sodium carbonate, the aqueous liquor is a lithium chloride brine, the contaminant is magnesium and/or calcium, and the treatment unit is the complete process shown in Figure 5.

These methods allow for the direct addition of alkali reagent solids into a circulation loop hydraulically connected to a treatment unit such as a wet scrubber or a slurry water treatment reactor (e.g., blanket sludge or fluidized bed reactor) without adding water such as fresh, cleaned or purified water.

A wet scrubber is a technique to clean exhaust gas, such as marine exhaust gas, and remove contaminating species such as $SO_x$, organics, particulate matter, and/or metals. In the flue gas wet scrubber, the exhaust gas gets in close contact with fine water droplets in a co-current or counter-current flow. This method is effective when the water droplet size is rather small and the total surface area between gas and the washing water gets large. The washing water is normally recirculated in order to save freshwater and reduce the amount of wastewater generated by the wet scrubber.

An advantage of these methods for treatment of marine exhaust gas is the decreased risk in safety associated with handling concentrated alkali reagent solution of generally pH>8 such as caustic NaOH compared to handing solids.

Another advantage of these methods for treatment of marine exhaust gas is the reduction in weight for alkali storage on board of a sea-borne vessel because the weight of alkali reagent solids is much less than the weight and volume of a concentrated alkali reagent solution.

Yet another advantage of these methods for treatment of marine exhaust gas is the use of the washing water in the circulation loop of a wet scrubber in closed or hybrid configuration, so that freshwater is not required to be stored on board a sea-borne vessel.

An advantage of these methods for treatment of water or gas contaminated with $SO_x$, organics, non-metals and/or metals is the use of water flow in the circulation loop hydraulically connected to an aqueous liquor or gas treatment unit, so that freshwater, cleaned or purified water is not required to make a slurry or solution of the fresh solid alkali reagent to supplement some of the alkali reagent which is spent and/or removed from the treatment unit (e.g., wet scrubber, a marine exhaust gas wet scrubber, blanket sludge reactor, fluidized bed reactor).

## BRIEF DESCRIPTION OF FIGURES

**Figure 1** illustrates a side-view diagram of a process for preparing a solution or slurry of a solid alkali reagent, comprising a pre-wetting step using one or more tangential aqueous slipstreams creating a swirling flow motion on an internal wall of a solid feeding chamber into which the solid alkali reagent is fed through a conduit and a mixing step using an educator which is hydraulically connected to the feeding chamber.

**Figure 2a** illustrates a top-view diagram of the process shown in **Figure 1** wherein the solid feeding chamber comprises two liquid inlets through which liquid sidestreams flow tangentially downward forming a vortex towards the fluid outlet of the solid feed pre-wetting chamber.

**Figure 2b** illustrates a top-view diagram of the process similar to **Figure 2a** except that the solid feeding chamber comprises three liquid inlets through which liquid sidestreams flow tangentially downward forming a vortex towards the fluid outlet of the solid feed pre-wetting chamber.

**Figure 3** illustrates a side-view diagram of a liquid or a gas inlet in the form of a slanted open-ended pipe through which a liquid sidestream flows onto the internal wall of the solid feed pre-wetting chamber.

**Figure 4** illustrates a side-view diagram of a process for the removal of contaminants from a an aqueous liquid or a waste gas effluent wherein the solution or slurry of a solid alkali reagent is prepared according to the process illustrated in **Figure 1** and directed to a circulation closed loop connected to a treatment unit using part of a circulating liquor as the source of liquid for preparing the solution or slurry.

**Figure 5** illustrates a diagram of a lithium carbonate production process from brine.

## DEFINITIONS

Unless otherwise specified, all reference to percentage (%) herein refers to percent by weight.

"Fresh" material or sorbent denotes a material which has not been in contact with contaminants, whereas "spent" material denotes a material which has already been in contact with contaminants.

As used herein, the term "upstream" refers to a position situated in the opposite direction from that in which the fluid to be treated flows.

As used herein, the term "downstream" refers to a position situated in the same direction from that in which the fluid to be treated flows.

As used herein, the term "hydraulically connected" means connected through at least one pipe in which a fluid flows.

As used herein, the terms "% by weight", "wt%", "wt. %", "weight percentage", or "percentage by weight" are used interchangeably.

As used herein, the term "dry matter" refers to a material which has been subjected to drying at a temperature of 105°C for at least 1 hour.

In the present specification, the choice of an element from a group of elements also explicitly describes :

- the choice of two or the choice of several elements from the group,
- the choice of an element from a subgroup of elements consisting of the group of elements from which one or more elements have been removed.

In the present specification, the description of a range of values for a variable, defined by a bottom limit, or a top limit, or by a bottom limit and a top limit, also comprises the embodiments in which the variable is chosen, respectively, within the value range : excluding the bottom limit, or excluding the top limit, or excluding the bottom limit and the top limit.

In the present specification, the description of several successive ranges of values for the same variable also comprises the description of embodiments where the variable is chosen in any other intermediate range included in the successive ranges. Thus, for example, when it is indicated that "the magnitude X is generally at least 10, advantageously at least 15", the present description also describes the embodiment where : "the magnitude X is at least 11", or also the embodiment where : "the magnitude X is at least 13.74", etc.; 11 or 13.74 being values included between 10 and 15.

The term "comprising" includes "consisting essentially of" and also "consisting of".

In the present specification, the use of "a" in the singular also comprises the plural ("some"), and vice versa, unless the context clearly indicates the contrary. By way of example, "a material" denotes one material or more than one material.

If the term "approximately" or "about" is used before a quantitative value, this corresponds to a variation of $\pm$ 10 % of the nominal quantitative value, unless otherwise indicated.

## DETAILED DESCRIPTION OF PREFERRED EMBODIMENTS

The present invention relates to a method for the removal of at least one contaminant from an aqueous liquid or gas, comprising:

preparing a solution or slurry of a solid alkali reagent by

- supplying a solid alkali reagent into a pre-wetting chamber via a solid feed pipe, preferably positioned at the top of this chamber;
- supplying a liquid via two or more liquid sidestreams, each through a liquid inlet positioned on a side wall of the chamber to allow the liquid sidestreams to wash an internal wall of a frusto-conical section of the chamber and flow downward towards a fluid outlet of the chamber and to further wet the solid alkali reagent with the supplied liquid thereby forming a pre-wetted reagent, wherein the pre-wetted reagent exits the chamber via a fluid outlet which is connected to a conduit comprising an eductor;
- flowing a stream though the conduit thereby creating a suction by the eductor to draw the pre-wetted reagent out of the solid feed pre-wetting chamber toward the chamber fluid outlet and mixing the pre-wetted reagent with the stream to form a slurry or solution of the alkali reagent exiting the eductor;

directing at least a portion of the slurry or solution of the alkali reagent exiting the eductor to a aqueous liquor or gas treatment unit, preferably via a circulation loop in fluid communication with the treatment unit, and
removing at least a portion of the contaminant from the aqueous liquor or gas in the treatment unit.

The method preferably comprises pre-wetting of the solid alkali reagent with a liquid and then mixing the pre-wetted reagent with liquid in an eductor to form the slurry or solution.

The pre-wetting step preferably comprises supplying the solid alkali reagent into a pre-wetting chamber, preferably through the top of this chamber via a solid feed pipe.

The pre-wetting step further comprises supplying a liquid via two or more liquid sidestreams, each through a liquid inlet disposed on a side wall of the chamber to allow the various liquid sidestreams to wash the internal wall of a frusto-conical section of the chamber and flow downward towards an fluid outlet of the chamber and further wetting the solid alkali reagent with the supplied liquid thereby forming a pre-wetted reagent. The pre-wetted reagent exits the chamber via a fluid outlet which is connected to a conduit comprising an eductor and through which a stream flows.

In operation the solid alkali reagent is generally conveyed through the solid feed pipe from a bulk pneumatic transport, bulk hopper car, storage bin or tank, sacks, big bags, feed hopper or other sources generally by air conveying, screw conveying, or other known techniques for moving dry particles through a pipe.

The mixing step preferably comprises flowing the stream into the conduit through the eductor creating a suction to draw the pre-wetted reagent out of the solid feed pre-wetting chamber toward the chamber fluid outlet into the eductor where the pre-wetted reagent is mixed with the stream to form a combined slurry or solution exiting the eductor.

In the method of the present invention, the treatment unit, can be a wet scrubber, preferably a marine exhaust gas wet scrubber, for removal of $SO_x$, organics, non-metals and/or metals, or a wastewater mixed reactor (e.g., a blanket sludge reactor or fluidized bed reactor) for the removal of organics, non-metals and/or metals in the treatment unit.

In preferred embodiments, the liquid sidestreams flow tangentially to the internal wall of the chamber frusto-conical section in a downward spiralling manner, thereby forming a vortex towards the fluid outlet of the solid feed pre-wetting chamber.

In some embodiments, the liquid sidestreams entering the solid feed pre-wetting chamber have a flow rate about from 10 vol% to 30 vol% of the flow rate of the stream entering the conduit.

In some embodiments, the stream entering the conduit has a volumetric flow rate of from 9 to 10 m³/hr, and the liquid sidestreams entering the chamber have a combined volumetric flow rate of from 0.1 to 3 m³/hr, preferably from 1 to 2 m³/hr, more preferably from 1.2 to 1.6 m³/hr.

In preferred embodiments, the liquid flowing into the pre-wetting chamber is freshwater, seawater, or an aqueous solution/liquor.

In preferred embodiments, the stream flowing through the conduit comprises freshwater, seawater, or an aqueous solution/liquor.

In some embodiments, the liquid for pre-wetting the solid alkali reagent, the stream entering the conduit, or both originate from a wet scrubber, preferably a marine exhaust gas wet scrubber, operated in a close-loop or hybrid configuration. In such instance, the slurry or solution exiting the eductor is preferably directed to the wet scrubber.

In some embodiments, the liquid for pre-wetting the solid alkali reagent, the stream entering the conduit, or both originate from a blanket sludge reactor or a fluidized bed reactor. In such instance, the slurry or solution exiting the eductor is preferably directed to the reactor.

In some embodiments, the solid alkali reagent comprises a carbonate material, a bicarbonate material, a sesquicarbonate material, a calcium phosphate material, or combinations thereof, preferably comprises sodium carbonate, sodium bicarbonate, sodium sesquicarbonate, a material comprising hydroxyapatite and/or brushite, or combinations thereof.

In preferred embodiments, the alkali reagent is suitable for $SO_x$ removal from aqueous liquor or gas, and the solid alkali reagent comprises a carbonate material, a bicarbonate material, a sesquicarbonate material, or combinations thereof, preferably comprises sodium carbonate, sodium bicarbonate, sodium sesquicarbonate, or combinations thereof, more preferably comprises sodium carbonate, sodium bicarbonate, or combinations thereof.

In some embodiments, the alkali reagent is suitable for organics, non-metals and/or metals removal from aqueous liquor or gas, and the solid alkali reagent comprises a calcium phosphate material, preferably comprises a material comprising hydroxyapatite and/or brushite, more preferably comprises a calcium-deficient hydroxyapatite with a Ca/P ratio less than 1.67 and/or a hydroxyapatite composite comprising activated carbon and a hydroxyapatite, such as a calcium-deficient hydroxyapatite with a Ca/P ratio less than 1.67.

The method is preferably carried out in a system comprising:

- a solid feed pre-wetting chamber comprising two or more liquid inlets, a frusto-conical section having an internal wall, a fluid outlet, and a central axis, wherein the frusto-conical section and the fluid outlet have the same central axis of the solid feed pre-wetting chamber;
- a solid feed pipe, a portion of which being internal to the chamber and whose internal end has an axis aligned with the central axis of the solid feed pre-wetting chamber, and
- a conduit comprising a liquid-driven eductor, said conduit being hydraulically connected to the frusto-conical section of the chamber via the fluid outlet of the frusto-conical section which is connected to a suction opening of the liquid-driven eductor.

In preferred embodiments, the conduit is hydraulically connected to a circulation loop of a treatment unit.

In preferred embodiments, the two or more liquid inlets comprise an open-ended pipe, preferably a slanted open-ended pipe which directs the liquid toward the internal wall. The open end of the pipe may be straight cut or preferably cut at an angle. In such instance, the open-ended pipe which serves as liquid inlet does not create mist or spray liquid droplets which may be directed towards the solid feed pipe and particularly a portion of said pipe which is internal to the chamber. The liquid preferably flows though the liquid inlets as a plurality of sidestreams directly, preferably on a tangential manner, along the internal wall of the frusto-conical section. The open-ended pipes are preferably fixed flushed to the wall of a cylindrical portion (or collar) of the pre-wetting chamber.

In preferred embodiments, the liquid inlets and the end of the solid feed pipe are horizontally displaced from each other, the liquid inlets being positioned downstream of the end of the solid fee pipe through which the solid reagent enters the chamber. In that manner, one can minimize exposure of the end of the solid feed pipe internal to the chamber with the liquid flowing through the liquid inlets.

In preferred embodiments, when the height of the collar is $h_1$, the end of the solid feed inlet pipe which is interior to the chamber may be positioned from 1/4 to 1/2, preferably from 1/3 to 1/2, of the height $h_1$ of the collar from the top end of the chamber. In preferred embodiments, the end of the liquid inlets which is interior to the chamber may be positioned from 7/8 to 1, preferably from 15/16 to 1, of the height $h_1$ of the collar from the top end of the chamber.

At any rate, because formation of liquid droplets or mist may be unavoidable in the chamber, may migrate upwards and may deposit on the walls of the portion of the solid feed pipe interior to the chamber, the portion of the solid feed inlet pipe which is interior to the solid feed chamber may be coated with or constructed from a non-stick material having a low coefficient of friction such as polytetrafluoroethylene (e.g., Teflon PTFE).

In some embodiments, the two or more liquid inlets may include sprays or nozzles which direct the liquid entering the chamber toward the internal wall of the frusto-conical section of the chamber to spread the liquid evenly onto the surface of that internal wall. However these sprays or nozzles may create liquid droplets or mist which may move upwards towards the solid feed pipe portion which is internal to the chamber, thereby posing a potential risk of wetting the walls of the internal portion of this pipe. Such wetting may result in formation of solid deposits at or around the internal end of this pipe and thus potentially clogging the pipe and resulting in shutting down the operation if flow of solid feed is prevented.

In preferred embodiments, the two or more liquid inlets exclude sprays or nozzles to avoid for some of the liquid entering the chamber to be directed toward the solid feed pipe and avoid wetting the solid feed pipe portion which is internal to the chamber.

In preferred embodiments, the method is being carried out on board of a seaborne vessel which comprises the system and the treatment unit. In such embodiments, the treatment unit preferably comprises a wet scrubber, preferably a marine exhaust gas wet scrubber, operated in a close-loop or hybrid configuration, and in such instance, the treatment in the wet scrubber is also carried out on board of the seaborne vessel.

In fact when the wet scrubber, preferably the marine exhaust gas wet scrubber, has a hybrid configuration and is switched from an open loop operation to a close loop operation, the method for preparing the slurry or solution of the alkali reagent is initiated to supply the solution or slurry of the alkali reagent to the wet scrubber.

In some embodiments, the liquid for pre-wetting the solid alkali reagent, the stream entering the conduit, or both originate from a wet scrubber, preferably a marine exhaust gas wet scrubber, operated in a close-loop or hybrid configuration, preferably comprising a washing water recirculating to and from a wet scrubber. In such instance, the slurry or solution exiting the eductor is preferably directed to the wet scrubber via a recirculation loop through which the wet scrubber washing water circulates. In this manner, no freshwater is needed to make the solution or slurry of the alkali reagent.

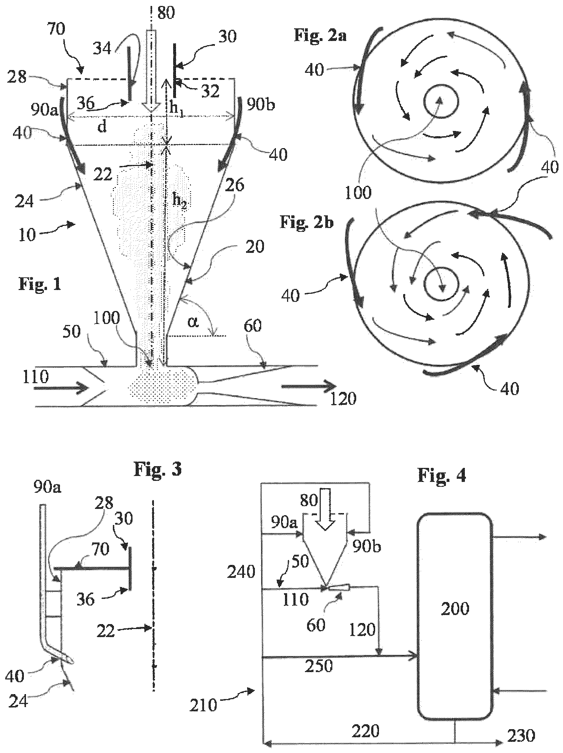

**Figures 1, 2a, 2b, and 3** illustrate particular preferred embodiments of the present invention for preparing a slurry or solution from a solid alkali reagent.

**Figure 1** illustrates a side-view diagram of a system 10 for preparing a solution or slurry of a solid alkali reagent.

The system 10 comprises a solid feeding pre-wetting chamber 20 with a central axis 22, a conduit 50 which includes an eductor 60, and a solid inlet pipe 30 through which a solid alkali reagent 80 flows into the solid feeding pre-wetting chamber 20. The solid feeding pre-wetting chamber 20 comprises a frusto-conical section 24 and a cylindrical section 28, such that the walls of both sections are continuous. The cylindrical section 28 may also be called the collar 28 of the chamber. The chamber frusto-conical section 24 is positioned downstream of the cylindrical section 28 of the chamber with respect to the main direction of the solid flow in the chamber 20. The frusto-conical section 24 of the chamber 20 is hydraulically connected to the conduit 50 via a fluid outlet 100. The frusto-conical section 24 and the cylindrical section 28 preferably have the same common central axis 22. The common central axis 22 is preferably vertical.

The frusto-conical section 24 of the chamber 20 has an internal wall 26 slanted from the horizontal at an angle $\alpha$. The angle $\alpha$ may be equal to or greater than the angle of repose of the solid alkali reagent. In preferred embodiments, the angle $\alpha$ is at least 50 degrees, preferably at least 55, more preferably at least 60 degrees and/or at most 78 degrees, preferably at most 75 degrees, more preferably at most 70 degrees.

The cylindrical section (or collar) 28 may be characterized by a vertical height $h_1$ and an internal diameter d. The frusto-conical section 24 can be characterized by a vertical height $h_2$. In some embodiments, the ratio "$d/h_2$" of the diameter d of the collar 28 to the height $h_2$ of the frusto-conical section 24 is from 1 to 1.5. In some embodiments, the ratio "$h_2/h_1$" of the height $h_2$ of the frusto-conical section 24 to the height $h_1$ of the collar

28 is from 1.3 to 3.5.

The frusto-conical section 24 is a conical section tapered downward toward the fluid outlet 100 of the chamber 20. There should not be any ledges or protruding elements on the interior wall 26 of the frusto-conical section 24 which would impede the movement of the pre-wetted reagent toward the fluid outlet 100 and which might promote plugging.

The solid feeding chamber 20 preferably comprises a lid 70 through which the solid inlet pipe 30 pierces.

The solid inlet pipe 30 may comprise a flexible conduit or a rigid conduit.

At the bottom of the frusto-conical section 24 of the solid feeding chamber 20, the fluid outlet 100 in fluid communication with the conduit 50 permits the solid alkali reagent 80 which has been pre-wetted by the liquid from sidestreams 90a and 90b to exit the solid feeding chamber 20. The direction of the fluid flow through the fluid outlet 100 is preferably perpendicular to the direction of fluid flow through the conduit 50 and the eductor 60.

The liquid sidestreams 90a and 90b preferably comprises aqueous sidestreams, preferably originating from a wet scrubber, preferably a marine exhaust gas wet scrubber, operated in a close-loop or hybrid configuration, preferably comprising at least portions of a washing water recirculating to and from a wet scrubber, preferably a marine exhaust gas wet scrubber.

The cylindrical section 28 of the solid feeding chamber 20 also comprises liquid inlets 40 piercing through the wall of the solid feeding chamber 20 and through which liquid streams 90a and 90b flow into the frusto-conical section 24 tangentially toward the internal wall 26 in a manner to cause the liquid to flow on the internal wall 26 of the frusto-conical section 24 and swirl around in a downward motion toward the bottom fluid outlet 100. This swirling action allows the wetting of the internal wall 26 and creation of a thin liquid film on top of the interior wall 26 of the chamber frusto-conical section 24 preventing solids from depositing onto that internal wall 26. The swirling action of the liquid in the chamber 20 along the internal wall 26 of the frusto-conical section 24 further allows for the pre-wetting of the alkali reagent solid in the chamber 20. The dissolution or dispersion of the solid starts with the liquid entering this frusto-conical section 24 of the solid feeding chamber 20 to form a pre-wetted reagent.

**Figure 2a** illustrates a top view of the chamber 20 (when the lid 70 is removed) to show the swirling flow of liquid sidestreams from two side liquid inlets 40 on the wall 26 of the chamber frusto-conical section 24.

**Figure 2b** illustrates a similar top view of the chamber 20 to show the swirling flow of liquid sidestreams from three side liquid inlets 40.

Referring back to **Figure 1,** flowing a stream 110 into the conduit 50 through the eductor 60 creates a suction to draw the pre-wetted reagent out of the solid feed pre-wetting chamber 20 toward the chamber fluid outlet 100 into the eductor 60 where the pre-wetted reagent is combined with the stream 110 to form a combined slurry or solution 120 exiting the eductor 60.

The stream 110 preferably comprises an aqueous stream, preferably originating from a wet scrubber, preferably a marine exhaust gas wet scrubber, operated in a close-loop or hybrid configuration, preferably comprises at least a portion of a washing water recirculating to and from a wet scrubber, preferably a marine exhaust gas wet scrubber.

The combined slurry or solution 120 exiting the eductor 60 is preferably directed to a treatment unit, preferably via a circulation loop which is hydraulically connected to the treatment unit - this is not illustrated in **Figure 1** but is shown in **Figure 4.**

In preferred embodiments, the portion 32 of the solid feed inlet pipe 30 which is interior to the solid feeding chamber 20 is not intentionally wetted with the liquid flowing though the liquid inlets 40, because it is difficult to prevent zones of stagnant liquid from forming on the solid feed inlet pipe 30. For example, if the inner wall 34 of the internal portion 32 of the solid feed inlet pipe 30 is wetted, the liquid would be relatively stagnant at the end 36 of the solid feed inlet pipe 30 and on the inner wall 34 of the solid feed inlet pipe 30 where capillary action would draw the liquid. When the liquid includes water, hydrated forms of the solid alkali reagent may accumulate in these stagnant zones forming crusty deposits on the inner wall 34 of the solid feed inlet pipe 30, which may very likely cause plugging.

In preferred embodiments, the end 36 of the solid feed inlet pipe 30 which is interior to the chamber 20 may be positioned from 1/4 to 1/2, preferably from 1/3 to 1/2, of the height $h_1$ of the collar 28 from the top end of the chamber (which is represented by the dashed line 70 for the optional lid).

In preferred embodiments, the end of the liquid inlet 40 which is interior to the chamber 20 may be positioned from 7/8 to 1, preferably from 15/16 to 1, of the height $h_1$ of the collar 28 from the top end of the chamber (which is represented by the dashed line 70 for the optional lid).

In instances, the portion 32 of the solid feed inlet pipe 30 which is interior to the solid feed chamber 20 may, however, be unintentionally wetted by spray from the liquid inlets 40 of the chamber 20 and from the eductor 60. For this reason, the portion 32 of the solid feed inlet pipe 30 which is interior to the solid feed chamber 20 may be coated with or constructed from a non-stick material having a low coefficient of friction such as polytetrafluoroethylene (e.g., Teflon PTFE). The other portion of the solid inlet pipe 30 which is exterior to the solid feed chamber 20 may be constructed of a material chosen for strength (e.g., metal such as stainless steel) as this portion of the solid inlet pipe 30 is not susceptible to plug formation, or it can be made of the same material as the interior portion 32, generally for simplification of construction of the pipe 30. Thus, in preferred embodiments, the interior portion 32 of the solid feed inlet pipe 30 is preferably constructed from or coated with a material chosen for its low coefficient of friction, e.g. polytetrafluoroethylene.

In preferred embodiments, the two or more liquid inlets 40 comprise a slanted open-ended pipe which directs the liquid toward the internal wall 26 of the frusto-conical section 24.

See **Figure 3** which illustrates an example of such type of liquid inlet 40. In such instance, the open-ended pipe with a diagonal-cut end serves as liquid inlet 40 and it does not create mist or spray liquid droplets which may be directed towards the interior portion 32 and the end 36 of the solid feed pipe 30. The liquid preferably flows as a stream directly onto, preferably on a tangential manner, and along the internal wall 26 of the frusto-conical section 24.

In preferred embodiments, the two or more liquid inlets 40 are not affixed or piercing or mounted on top of the chamber such as through the lid 70 of the chamber 20.

Each of the two or more liquid inlets 40 (preferably comprising an open-ended pipe) is preferably fixed flushed to the wall of the cylindrical portion (collar) 28 of the chamber 20 which is positioned upstream of the frusto-conical section 24 of the chamber 20 with respect to the main direction of the liquid flow in the chamber 20. The advantage of positioning the two or more liquid inlets 40 through the wall of the cylindrical portion 28 of the chamber 20 is that there is a shorter distance for the liquid (compared to the situation if they were positioned through the lid 70 of the chamber) to make contact with the interior wall 26 of the chamber frusto-conical section 24.

In preferred embodiments, the two or more liquid inlets 40 exclude sprays or nozzles to avoid liquid droplets or mist to be directed toward the solid feed pipe 30 and avoid wetting the portion 32 of the solid feed pipe 30 which is internal to the chamber 20, including its end 36 and internal wall 34.

Referring back to **Figure 1,** the pre-wetting of the fed solids 80 using one or more liquid sidestreams 90a, 90b which flow tangentially along the internal wall 26 of the frusto-conical section 24 allows for the solid alkali reagent to be fed through the conduit 50 without forming an encrusting deposit on the internal wall 26 of the chamber frusto-conical section 24 especially near the fluid outlet 100 and on the internal walls of the conduit 50 which are positioned downstream of the chamber outlet 100 and upstream of the eductor 60. Without the pre-wetting with the liquid sidestreams 90 (90a, 90b,...) tangentially injected and directed onto the internal wall 26, crusty deposit formation may be observed near the fluid outlet 100, and in some instances can cause flow restriction and sometimes blockage of fluid flow the chamber fluid outlet 100 into the conduit 50.

The eductor 60 creates a strong suction in the conduit 50 such that the solid reagent 80 and the sidestreams 90a and 90b which form a pre-wetted reagent are sucked into the conduit 50 and mixed with the stream 110 which flows through the conduit 50. The pre-wetted reagent passes through the eductor 60 to be mixed with the stream 110 flowing through the conduit 50, in order to form a combined stream 120 in the eductor 60 and which exits the conduit 50.

This stream 120 may comprise a solution or slurry of the alkali reagent and has the combined flows of the stream 110 entering the conduit 50, of the supplied alkali reagent 80 and of the liquid sidestreams 90 (90a, 90b...) used for pre-wetting the solid reagent 80.

The flow rate of the liquid sidestreams 90 (90a, 90b) entering the feeding chamber 20 is preferably about from 10 vol% to 30 vol% of the flow of the stream 110 entering the conduit 50 comprising the eductor 60.

As an example, the volumetric flow rate of the stream 110 entering the conduit 50 may be 9-10 $m^3$/hr, whereas the combined volumetric flow rate of the sidestreams 90 entering the feeding chamber 20 may be from 0.1 to 3 $m^3$/hr, preferably from 1 to 2 $m^3$/hr, more preferably from 1.2 to 1.6 $m^3$/hr.

**Figure 4** illustrates the method for removing at least one contaminant from an aqueous liquor or gas according to present invention. The slurry or solution of the alkali reagent is used in an aqueous liquor or gas treatment unit for removing contaminants and delivered to that unit via a circulation loop hydraulically connected to the treatment unit.

**Figure 4** illustrates a process flow diagram in which the system 10 of **Figure 1** is used. The system 10 for preparing the solution or slurry of the alkali reagent 80 is hydraulically connected to a treatment unit 200 via a circulation loop 210.

The treatment unit 200 may comprise a wet scrubber, particularly an exhaust gas scrubber, more particularly a marine exhaust gas scrubber.

The treatment unit 200 may comprise a blanket sludge reactor or a fluidized reactor.

In treatment unit 200, the alkali reagent removes at least a portion of contaminants from the aqueous liquor or gas; at least a portion of the aqueous liquor from the treatment unit 200 via stream 220 is withdrawn from the unit 200 and recirculated in the loop 210, while another portion of the aqueous liquor may be purged via stream 230 from unit 200.

The stream 220 withdrawn from the unit 200 is preferably split into a first portion via stream 110 flowing through the conduit 50; a second portion via stream 240 fed to the chamber 20 and the remainder portion 250 returned to the treatment unit 200. The stream 240 is preferably further split into the various tangential side streams 90a, 90b to enter the chamber 20 via tangential liquid inlets 40. If there are more than two tangential liquid inlets 40 in the chamber 20 (such as illustrated in **Figure 2b**), then the stream 240 is preferably divided equally in the same number of sidestreams 90 as the number of liquid inlets 40.

The slurry or solution 120 exiting the eductor 60 is preferably combined with the stream 250 of the loop 210, preferably downstream of a pump which circulates the aqueous liquor in the loop 210.

The flow of stream 240 fed to the chamber 20 is preferably facilitated also by a pump preferably positioned upstream of the split between stream 110 and streams 90a, 90b.

In some embodiments, the treatment unit 200 is a wet scrubber, preferably a marine exhaust gas wet scrubber, in a close-loop or hybrid configuration. When the wet scrubber 200 is operated in close loop, the circulation loop 210 permits the supplementation of fresh alkali reagent in solid form directly into the system 10 of **Figure 1** where the liquid for pre-wetting and dispersing/-dissolving the solid alkali reagent in order to form the alkali reagent solution or slurry is at least a portion of the aqueous liquor originating from the wet scrubber.

Although not illustrated, the water stream 220 in the loop 210 exiting the scrubber 200 may be cleaned up prior to being fed to the system 10 via stream 110 and sidestreams 90. For example, solids may be removed from stream 220 prior to entering the system 10.

The volumetric flow rate of the aqueous sidestreams 90 entering the feeding chamber is preferably about from 10 vol% to 30 vol% of the volumetric flow of the water stream 110 entering the conduit 50 comprising the eductor 60.

The combined volumetric flow rate of the sidestreams 90 entering the feeding chamber and of the stream 110 entering the conduit 50 may represent a small fraction of the overall volumetric flow rate of the circulation loop 210. For example the combined volumetric flow rate of the streams (90 and 110) entering the system 10 may be from 1 vol% to 10 vol%, preferably from 1 vol% to 5 vol%, more preferably from 1.5 vol% to 3 vol%, of the volumetric flow rate of the stream 220 exiting the unit 200. As an example, the overall volumetric flow rate of the circulation loop 210 may be 500 $m^3$/hr, whereas the combined volumetric flow rate of the stream entering the system 10 may be from 10 to 12 $m^3$/hr.

In some embodiments, the treatment unit 200 is a wastewater treatment reactor which has the circulation loop 210 generally operated to maintain the solid alkali reagent in suspension (slurry form) inside the unit 200. The circulation loop 210 permits the supplementation of fresh solid alkali reagent directly into the system 10 of **Figure 1** where the liquid for making fresh slurry originates from the treatment unit 200.

A particular embodiment relates to a method for purifying a contaminated aqueous liquor containing organic contaminants, metallic contaminants and/or non-metallic contaminants, whether these metallic and/or non-metallic contaminants may be in the form of cations and/or anions, e.g., oxyanions.

Such method may comprise:

Mixing an alkali reagent in the contaminated aqueous liquor for a sufficient time of contact so that the alkali reagent adsorbs at least a portion of the contaminants; and

subjecting the mixture to a separation to produce a treated aqueous liquor partially purified of contaminants and the 'spent' alkali reagent loaded with some contaminants that is removed from the mixture.

The mixing may be carried out in a sludge blanket contact reactor or in fluidized bed reactor.

The method may further comprise:

recovering a liquid overflow from the sludge blanket reactor;

adding a flocculant to the recovered liquid overflow of the sludge blanket reactor in order to form a mixture comprising particles of alkali reagent loaded with some contaminants and entrained out of the contact reactor and flocculated;

introducing said mixture into a settling tank where the mixture is separated into:

- the aqueous liquor partially purified of contaminants, said partially purified aqueous liquor being recovered as overflow from the settling tank,
- and into an underflow from the settling tank comprising flocculated and settled particles of alkali reagent recovered as underflow from the settling tank; and

recycling at least one portion of the underflow from the settling tank containing flocculated and settled particles of alkali reagent to the sludge blanket contact reactor.

In this particular embodiment, the slurry 120 of the alkali reagent is used to make-up the loss of reagent via small purging of spent alkali reagent and/or due to reduced trapping activity on the loaded alkali reagent.

In preferred embodiments, the alkali reagent is preferably mixed with the contaminated aqueous liquor in the unit 200 to achieve a weight concentration of at least 0.5% by weight, or at least 1% by weight, or at least 1.5% by weight, and at most 10% by weight, preferably at most 8% by weight, more preferably at most 6% by weight, yet more preferably at most 4% by weight.

In the unit 200, the contact time between the alkali reagent and the contaminated aqueous liquor may be at least 1 minute, preferably at least 15 minutes, more preferably at least 30 minutes.

The metallic contaminant to be removed may contain at least one metal selected from the group consisting of Al, Ag, Ba, Be, Ca, Ce, Co, Cd, Cu, Cr, Fe, Hg, La, Li, Mg, Mn, Mo, Ni, Pb, Pd, Rb, Sb, Sn, Th, Ti, U, V, Y, Zn; preferably contains at least Hg, more preferably in the form of cations. The non-metallic contaminant to be removed may contain at least one non-metal selected from the group consisting of As, B, and Se, preferably contains at least As and/or Se, more preferably in the form of oxyanions. The organic contaminants to be removed may be selected from the group consisting of VOC (volatile organic compound), aromatic compounds including PAHs (polycyclic aromatic hydrocarbons), dioxins, furans, phenolic compounds, or any mixture thereof.

## ALKALI REAGENT

In some embodiments of the present invention, the solid alkali reagent comprises a carbonate material, a bicarbonate material, a sesquicarbonate material, a calcium phosphate material, or combinations thereof, preferably comprises sodium carbonate, sodium bicarbonate, sodium sesquicarbonate, a material comprising hydroxyapatite and/or brushite, or combinations thereof.

According to preferred embodiments of the present invention, the solid alkali reagent comprises sodium bicarbonate, sodium carbonate, sodium sesquicarbonate, and/or a calcium phosphate material.

According to more preferred embodiments, the solid alkali reagent may comprise a (bi)carbonate material such as sodium bicarbonate, sodium carbonate, and/or sodium sesquicarbonate which is a double salt of sodium carbonate and bicarbonate.

In the the present invention, the solid alkali reagent is preferably in form of particles.

As used herein, the term "equivalent spherical diameter" refers to the diameter of a sphere having the same equivalent volume as the particle. As used herein, particle average size may be expressed as "Dxx" where the "xx" is the volume percent of that particle having a size equal to or less than the Dxx. The D90 is defined as the particle size for which ninety percent by volume of the particles has a size lower than the D90. The D50 is defined as the particle size for which fifty percent by volume of the particles has a size lower than the D50. The D10 is defined as the particle size for which ten percent by volume of the particles has a size lower than the D10. For non spherical particles, the diameter is the equivalent spherical one.

The D10, D50 and D90 can be measured by laser diffraction analysis, for example on a Malvern type analyzer. Suitable Malvern systems include the Malvern MasterSizer S, Malvern 2000, Malvern 2600 and Malvern 3600 series. The particle size measurement can also be measured using laser diffraction, such as using a Beckman Coulter LS 230 laser diffraction particle size analyser (laser of wavelength 750 nm) on particles suspended in water and using a size distribution calculation based on Fraunhofer diffraction theory (particles greater than 10 $\mu$m) and on Mie scattering theory (particles less than 10 $\mu$m), the particles being considered to be spherical.

Specific surface area can be measured by laser light scattering using the nitrogen adsorption isotherm and the BET model (Brunauer, Emmett and Teller), such as with a Micromeritics Gemini 2360 Surface Area Analyzer.

As used herein "angle of repose" is the critical angle of repose as known in the art of a granular material, i.e. the steepest angle of descent or dip relative to the horizontal plate to which a material can be piled without slumping. The procedure for the measurement of the angle of repose is preferably as follows. The angle of repose of the solid reagent can be measured after formation of a heaped cone that the solid reagent forms falling from a sieve size of 710 $\mu$m on a cylinder of 50 mm diameter (D) and 80 mm in height. The height of the screen with respect to the apex of the cone should be maintained between 2 and 3 cm. AT slope angle (°) is calculated from the measurement of the height H (in mm) of the solid heap remaining on the cone:

$$[AT] = \tan^{-1}(2\,H\,/\,D)\,{}^{*}\,(180\,/\,\pi)$$

In preferred embodiment, the solid alkali reagent comprises at least 80% by weight of sodium carbonate, preferably at least 90% by weight of sodium carbonate, preferably at least 95% by weight of sodium carbonate, preferably at least 98% by weight of sodium carbonate, preferably at least 99% by weight of sodium carbonate, preferably at least 99.3% by weight of sodium carbonate, based on the total weight of the particles.

When the solid particles comprises dense soda ash particles, the dense soda ash particles preferably have a mean diameter D50 of which is greater than 100 $\mu$m, in general at least 120 $\mu$m, or even at least 140 $\mu$m, and/or preferably less than 1000 $\mu$m, or even less than 800 $\mu$m, or even less than 750 $\mu$m. In some preferred embodiments, the dense soda ash particles have a mean diameter D50 from 140 $\mu$m to 750 $\mu$m. In some preferred embodiments, the dense soda ash particles have a diameter D10 from 150 $\mu$m to 350 $\mu$m and/or a diameter D90 from 350 $\mu$m to 1100 $\mu$m.

When the solid particles comprises light soda ash particles, the light soda ash particles preferably have a mean diameter D50 of which is greater than 30 $\mu$m, in general at least 40 $\mu$m, and/or preferably less than 150 $\mu$m, or even less than 135 $\mu$m, or even less than 120 $\mu$m. In some preferred embodiments, the light soda ash particles have a mean diameter D50 from 40 $\mu$m to 120 $\mu$m. In some preferred embodiments, the light soda ash particles have a diameter D10 from 15 $\mu$m to 55 $\mu$m and/or a diameter D90 from 100 $\mu$m to 250 $\mu$m.

When the solid particles comprise dense soda ash particles, the dense soda ash particles preferably have an angle of repose of from 27 to 45.

When the solid particles comprise light soda ash particles, the light soda ash particles preferably have an angle of repose of from 50 to 65.

In some embodiment, the solid alkali reagent comprises at least 80% by weight of sodium bicarbonate, preferably at least 90% by weight of sodium bicarbonate, preferably at least 95% by weight of sodium bicarbonate, preferably at least 98% by weight of sodium bicarbonate, preferably at least 99% by weight of sodium bicarbonate, preferably at least 99.9% by weight of sodium bicarbonate, based on the total weight of the particles.

Examples of suitable sources of sodium bicarbonate for the solid alkali reagent include SOLVAir® Select 300 and 350 Sodium Bicarbonate from SOLVAY. The mean particle diameter D50 for SOLVAir® Select 300 and 350 Sodium Bicarbonate are about 140 $\mu$m and 15 $\mu$m, respectively.

When the solid particles comprises sodium bicarbonate, the sodium bicarbonate particles preferably have a mean diameter D50 of which is at least 10 $\mu$m, in general at least 12 $\mu$m, and/or preferably at most 200 $\mu$m, or even at most 150 $\mu$m. In some preferred embodiments, the sodium bicarbonate particles have a mean diameter D50 from 10 $\mu$m to 35 $\mu$m. In some preferred embodiments, the sodium bicarbonate particles have a diameter D10 from 1 $\mu$m to 20 $\mu$m and/or a diameter D90 from 50 $\mu$m to 300 $\mu$m.

In an embodiment, the solid alkali reagent comprises a sesquicarbonate, preferably sodium sesquicarbonate. Preferably, the alkali reagent comprises sodium sesquicarbonate dihydrate ($Na_2CO_3.NaHCO_3.2H_2O$). The sodium sesquicarbonate can have different origins. It can be produced artificially out of different sodium sources. However, it is particularly interesting that sesquicarbonate derives from a natural trona ore. Suitable sodium sesquicarbonate can have a mean particle diameter D50 from 0.1 to 10 mm (100-10,000 $\mu$m). However sodium sesquicarbonate is preferably milled to reduce the average particle size prior to use in the preparation method according to the first aspect of the invention. Examples of suitable sources of sodium sesquicarbonate for the solid alkali reagent include SOLVAir® Select 200 and 150 Trona from SOLVAY. The mean particle diameter D50 for SOLVAir® Select 200 Trona is about from 25 to 50 $\mu$m, preferably from 35 to 46 $\mu$m. The SOLVAir® Select 150 Trona has a D50 less than that of the SOLVAir® Select 200 Trona.

In preferred embodiments of the present invention, the solid alkali reagent may comprise, based on the total weight of dry matter:

- at least 95 wt% $Na_2CO_3$, preferably at least 97 wt% $Na_2CO_3$, more preferably at least 99 wt% $Na_2CO_3$, or
- at least 95 wt% $NaHCO_3$, preferably at least 97 wt% $NaHCO_3$, or
- at least 70 wt% sesquicarbonate ($Na_2CO_3.NaHCO_3.2H_2O$), preferably at least 80 wt% $Na_2CO_3.NaHCO_3.2H_2O$.

In preferred embodiments of the present invention, the method provides a solution of an alkali reagent which is suitable for $SO_x$ removal from aqueous liquor or gas. In such instance, the solution preferably comprises a carbonate salt, a bicarbonate salt, or combinations thereof, more preferably comprises sodium carbonate, sodium bicarbonate, or combinations thereof. In such embodiments, the solution preferably comprises at least 1 wt% of the alkali reagent, or at least 3wt%, or at least 5 wt% and/or preferably at most 20 wt%, or at most 15 wt%, or at most 10 wt% of the alkali reagent.

According to alternate preferred embodiments in the present invention, the solid alkali reagent may comprise a water-insoluble material such as a calcium phosphate material.

The solid alkali reagent may comprise an apatite and/or a brushite (dicalcium phosphate dihydrate).

The solid alkali reagent preferably comprises an apatite, more preferably a hydroxyapatite (HAP) having the chemical formula:

$Ca_{10-x}(HPO_4)_x(PO_4)_{6-x}(OH)_{2-x}$, where $0 \leq x \leq 1$.

Hydroxyapatite is an adsorbent which can be used for trapping and immobilizing metals, non-metals, and organics within its structure from contaminated effluents, particularly aqueous effluents. See, for example, WO 2015/173437 by Solvay SA.

The metallic contaminant to be removed may contain at least one metal selected from the group consisting of Al, Ag, Ba, Be, Ca, Ce, Co, Cd, Cu, Cr, Fe, Hg, La, Li, Mg, Mn, Mo, Ni, Pb, Pd, Rb, Sb, Sn, Th, Ti, U, V, Y, Zn; preferably contains at least Hg, more preferably in the form of cations. The non-metallic contaminant to be removed may contain at least one non-metal selected from the group consisting of As, B, and Se, preferably contains at least As and/or Se, more preferably in the form of oxyanions. The organic contaminants to be removed may be selected from the group consisting of VOC (volatile organic compound), aromatic compounds including PAHs (polycyclic aromatic hydrocarbons), dioxins, furans, phenolic compounds, or any mixture thereof

Hydroxyapatite should not be confused with tricalcium phosphate (TCP), which has a similar weight composition: $Ca_3(PO_4)_2$. The Ca/P molar ratio of TCP is 1.5 whereas the Ca/P ratio is more than 1.5 for hydroxyapatite. Industrial apatites sold as food additives or mineral fillers are, as a general rule, variable mixtures of TCP and hydroxyapatite.

The hydroxyapatite may be a stoichiometric hydroxyapatite with a Ca/P molar ratio of 1.67 or hydroxyapatite deficient in calcium with a Ca/P molar ratio more than 1.5 and less than 1.67, more preferably with a Ca/P molar ratio more than 1.54 and less than 1.65.

The solid alkali reagent preferably comprises a synthetic hydroxyapatite. A suitable example of such synthetic hydroxyapatite is described in US2017/0080401 by SOLVAY SA.

In some embodiments, the hydroxyapatite in the solid alkali reagent may be a synthetic hydroxyapatite composite wherein at least one additive is incorporated or embedded into the hydroxyapatite. In such instance, the at least one additive comprises a metal (zero-valent metal) or any derivatives thereof (such as hydroxide, oxyhydroxide, oxide), and/or at least one activated carbon. The metal additive may include iron or aluminium.

In some embodiments, the solid alkali reagent may further comprise another calcium compound other than hydroxyapatite.

In preferred embodiments, the solid alkali reagent preferably comprises calcium carbonate and a hydroxyapatite, preferably a calcium-deficient hydroxyapatite with a Ca/P greater than 1.5 and less than 1.67. In such instances, the solid alkali reagent is synthetically made.

In some embodiments, the solid alkali reagent may comprise, based on the total weight of dry matter:

- at least 70wt%, advantageously at least 75wt%, and more advantageously still at least 80wt% of hydroxyapatite, preferably a calcium-deficient hydroxyapatite with a Ca/P greater than 1.5 and less than 1.67; and
- at most 98wt%, advantageously at most 97wt% of hydroxyapatite, preferably a calcium-deficient hydroxyapatite with a Ca/P greater than 1.5 and less than 1.67.

In such embodiments, the solid alkali reagent may comprise, based on the total weight of dry matter:

- at most 20 wt% calcium carbonate, advantageously at most 15wt% calcium carbonate, more advantageously at most 10wt% calcium carbonate; and
- at least 0.5 wt% calcium carbonate, advantageously at least 1 % calcium carbonate, more advantageously at least 2 % calcium carbonate.

In alternate embodiments, the solid alkali reagent may comprise, based on the total weight of dry matter:

- at most 85wt%, advantageously at most 70wt%, and more advantageously still at most 65wt% of a hydroxyapatite, preferably a calcium-deficient hydroxyapatite with a Ca/P greater than 1.5 and less than 1.67; and
- at least 25wt%, advantageously at least 30wt% of a hydroxyapatite, preferably a calcium-deficient hydroxyapatite with a Ca/P greater than 1.5 and less than 1.67.

In such embodiments, the solid alkali reagent may comprise, based on the total weight of dry matter:

- more than 7wt% calcium carbonate, advantageously more than 10wt% calcium carbonate, more advantageously more than 20wt% calcium carbonate, yet more advantageously at least 25wt% calcium carbonate; and
- at most 75wt% calcium carbonate, advantageously at most 70% calcium carbonate.

In some embodiments, the solid alkali reagent may further include from 1 to 40 wt% activated carbon, preferably from 2 to 30 wt% activated carbon, more preferably from 3 to 20 wt% activated carbon, yet more preferably from 5 to 15 wt% activated carbon.

In preferred embodiments, the solid alkali reagent comprises a calcium phosphate material such as hydroxyapatite, in the form of particles.

In some embodiments, the particles of the calcium phosphate material preferably have a BET specific surface area of at least 60 $m^2$/g, preferably of at least 90 $m^2$/g, more preferably of at least 100 $m^2$/g, yet more preferably of at least 110 $m^2$/g, most preferably of at least 120 $m^2$/g. In some embodiments, the particles of the calcium phosphate material have a BET specific surface area of at most 200 $m^2$/g, preferably of at most 185 $m^2$/g, preferably of at most 170 $m^2$/g.

The solid particles of the calcium phosphate material preferably have a mean diameter D50 of which is greater than 10 $\mu$m, in general at least 20 $\mu$m, or even at least 25 $\mu$m, or even at least 30 $\mu$m, or even at least 35 $\mu$m, and/or preferably less than 1000 $\mu$m, or even less than 800 $\mu$m, or even less than 500 $\mu$m. In some preferred embodiments, the solid particles of the calcium phosphate material have a mean diameter D50 from 20 microns to 60 microns. The mean particles size D50 is the diameter such that 50 % by weight of the particles have a diameter less than said value. The particle size measurement may be measured using laser diffraction, such as using a Beckman Coulter LS 230 laser diffraction particle size analyser (laser of wavelength 750 nm) on particles suspended in water and using a size distribution calculation based on Fraunhofer diffraction theory (particles greater than 10 $\mu$m) and on Mie scattering theory (particles less than 10 $\mu$m), the particles being considered to be spherical.

In preferred embodiments of the present invention, the method provides a slurry of the alkali reagent which is suitable for organics, non-metals and/or metals removal from an aqueous liquor. In such instance, the slurry preferably comprises a water-insoluble calcium phosphate material, preferably a material comprising hydroxyapatite and/or brushite, more preferably a material comprising a calcium-deficient hydroxyapatite with a Ca/P ratio less than 1.67 and/or a synthetic hydroxyapatite composite comprising activated carbon and a hydroxyapatite, such as a calcium-deficient hydroxyapatite with a Ca/P ratio less than 1.67.

In such embodiments, the slurry of the alkali reagent which is made in the preparation method preferably comprises at least 0.5 wt% of solids, or at least 1 wt% of solids, or at least 2 wt% of solids, or at least 5 wt% of solids, and/or preferably at most 25 wt% of solids, or at most 20 wt% of solids, or at most 15 wt% of solids.

In some embodiments in of the present invention, the method provides a slurry of one or more alkali reagents which is/are suitable for $SO_x$, organics, non-metals and/or metals removal from an aqueous liquor. In such instance, the slurry may comprise a water-insoluble calcium phosphate material dispersed in a solution of a (bi)carbonate salt. The water-insoluble calcium phosphate material in the slurry is preferably a material comprising hydroxyapatite and/or brushite, more preferably a material comprising a calcium-deficient hydroxyapatite with a Ca/P ratio less than 1.67 and/or a hydroxyapatite composite comprising activated carbon and a hydroxyapatite, such as a calcium-deficient hydroxyapatite with a Ca/P ratio less than 1.67. The solution of a (bi)carbonate salt preferably comprises sodium carbonate, sodium bicarbonate, or combinations thereof, more preferably comprises sodium carbonate. In such embodiments, the slurry of the alkali reagent preferably comprises at least 0.5 wt% of solids, or at least 1 wt% of solids, or at least 2 wt% of solids, or at least 5 wt% of solids, and/or preferably at most 25 wt% of solids, or at most 20 wt% of solids, or at most 15 wt% of solids.

In particular the present invention relates to the following embodiments:

## EXAMPLES

The examples, the description of which follows, serve to illustrate the invention.

## Example 1

A unit as illustrated by Figure 1 was used for this test.

A dense soda ash solution was made using this equipment at various temperatures: 20, 30, 40 and 50°C using a solid flow rate of 1000 kg/hr of dense soda ash, 9.4-9.8 $m^3$/hr of flow rate of water in the conduit containing the eductor and 1.2-1.6 $m^3$/hr of water (liquid) divided into two sidestreams of equal flow rate tangentially flowing onto the interior wall of the frusto-conical section of the pre-wetting chamber. Under these operation conditions no issue of clogging or crust formation was observed on the internal surfaces of the solid feed pipe and there was no clogging of the fluid outlet at the bottom of the chamber or in the eductor.

## Claims

1. A method for the removal of at least one contaminant from an aqueous liquor or a gas, comprising:

   - preparing a solution or slurry of a solid alkali reagent by, supplying a

      solid alkali reagent into a pre-wetting chamber (20) via a solid feed pipe (30), preferably positioned at the top of this chamber;

   - supplying a liquid via two or more liquid sidestreams, each through a liquid inlet (40) positioned on a side wall of the chamber (20) to allow the liquid sidestreams to wash an internal wall of a frusto-conical section (24) of the chamber (20) and flow downward towards a fluid outlet (100) of the chamber (20) and to further wet the solid alkali reagent with the supplied liquid thereby forming a pre-wetted reagent, wherein the pre-wetted reagent exits the chamber (20) via a fluid outlet (100) which is connected to a conduit (50) comprising an eductor (60);

   - flowing a stream though the conduit (50) thereby creating a suction by the eductor (60) to draw the pre-wetted reagent out of the solid feed pre-wetting chamber (20) toward the chamber fluid outlet (100) and mixing the pre-wetted reagent with the stream to form a slurry or solution of the alkali reagent exiting the eductor (60); directing at least a portion of the slurry or solution of the alkali reagent exiting the eductor (60) to a aqueous liquor or gas treatment unit, via a circulation loop (210) in fluid communication with the treatment unit, and removing at least a portion of the contaminant from the aqueous liquor or gas in the treatment unit.

2. The method according to claim 1, in which the solid alkali reagent comprises a carbonate material, a bicarbonate material, a sesquicarbonate material, a calcium phosphate material, or combinations thereof, preferably comprises sodium carbonate, sodium bicarbonate, sodium sesquicarbonate, a material comprising hydroxyapatite and/or brushite, or combinations thereof.

3. The method according to claim 1 or 2, in which the alkali reagent is suitable for $SO_x$ removal from water, and in which the solid alkali reagent comprises a carbonate material, a bicarbonate material, a sesquicarbonate material, or combinations thereof, preferably comprises sodium carbonate, sodium bicarbonate, sodium sesquicarbonate, or combinations thereof.

4. The method according to claim 1, 2, or 3, in which the alkali reagent is suitable for organics, non-metals and/or metals removal from aqueous liquor, and in which the solid alkali reagent comprises a calcium phosphate material, preferably comprises a material comprising hydroxyapatite and/or brushite, more preferably comprises a calcium-deficient hydroxyapatite with a Ca/P ratio less than 1.67 and/or a hydroxyapatite composite comprising activated carbon and a hydroxyapatite, such as a calcium-deficient hydroxyapatite with a Ca/P ratio less than 1.67.

5. The method according to any of the preceding claims, in which the treatment unit comprises a wet scrubber, preferably a marine exhaust gas wet scrubber, operated in a close-loop or hybrid configuration.

6. The method according to any of the preceding claims, in which the liquid flowing into the pre-wetting chamber, or the stream flowing through the conduit, or both comprise(s) freshwater, seawater, or an aqueous solution.

7. The method according to any of the preceding claims, being carried out on board of a seaborne vessel.

8. The method according to any of the preceding claims, in which the liquid for pre-wetting the solid alkali reagent, the stream entering the conduit (50), or both originate from;

    a wet scrubber, preferably a marine exhaust gas wet scrubber, operated in a close-loop or hybrid configuration, preferably comprises at least part of a washing water recirculating to and from a wet scrubber, preferably a marine exhaust gas wet scrubber, operated in a close-loop or hybrid configuration, and
    in which the slurry or solution exiting the eductor is directed to the wet scrubber, or
    a sludge blanket contact reactor or a fluidized bed reactor, preferably comprises at least part of a liquor recirculating to and from the reactor, and in which the slurry exiting the eductor is directed to the reactor.

9. The method according to any of the preceding claims, in which the liquid sidestreams entering the solid feed pre-wetting chamber (30) have a flow rate about from 10 vol% to 30 vol% of the flow rate of the stream entering the conduit.

10. The method according to any of the preceding claims, being carried out in a system comprising:

    - a solid feed pre-wetting chamber (20) comprising two or more liquid inlets (40); a frusto-conical section (24) having an internal wall, a fluid outlet (100), and a central axis (22), wherein the frusto-conical section (24) and the fluid outlet (100) have the same central axis (22) of the solid feed pre-wetting chamber (20);
    - a solid feed pipe (30), a portion of which being internal to the chamber (20) and whose internal end has an axis aligned with the central axis (22) of the solid feed pre-wetting chamber (20), and
    - a conduit (50) comprising a liquid-driven eductor (60), said conduit (50) being hydraulically connected to the frusto-conical section (24) of the chamber (20) via the fluid outlet (100) of the chamber (30) which is connected to a suction opening of the liquid-driven eductor (60), said conduit (50) being hydraulically connected to the circulation loop (210) of a treatment unit, such as a wet scrubber, preferably a marine exhaust gas wet scrubber, or a slurry water treatment reactor.

11. The method according to any of the preceding claims, in which the two or more liquid inlets (40) comprise an open-ended pipe, preferably a slanted open-ended pipe, which directs the liquid toward the internal wall of the chamber frusto-conical section (24).

12. The method according to any of the preceding claims, in which the two or more liquid inlets exclude sprays or nozzles to avoid liquid to be directed toward the solid feed pipe and avoid wetting a portion of the solid feed pipe portion which is internal to the pre-wetting chamber (20).

13. The method according to any of the preceding claims, in which the liquid sidestreams flow tangentially onto an internal wall of the chamber frusto-conical section (24) in a downward spiralling manner, thereby forming a vortex towards the fluid outlet (100) of the pre-wetting chamber (20)

14. The method of claim 1 in which the gas originates from an exhaust gas, particularly originate from a marine engine exhaust gas.

15. The method of claim 1 in which the contaminant comprises $SO_x$, organics, non-metals and/or metals.


**Patentansprüche**

1. Verfahren zur Entfernung mindestens einer Verunreinigung aus einer wässrigen Flüssigkeit oder einem Gas, umfassend:

    - Herstellen einer Lösung oder Aufschlämmung aus einem festen alkalischen Reagens, Leiten eines festen alkalischen Reagens über eine Feststoffzuleitung (30), die vorzugsweise oben an dieser Kammer platziert ist, in eine Vorbenetzungskammer (20);
    - Leiten einer Flüssigkeit über zwei oder mehr Flüssigkeitsseitenströme, jeder durch einen Flüssigkeitseinlass (40), der sich an einer Seitenwand der Kammer (20) befindet, damit die Flüssigkeitsseitenströme eine Innenwand eines kegelstumpfförmigen Abschnitts (24) der Kammer (20) waschen können und nach unten in Richtung eines Fluidauslasses (100) der Kammer (20) strömen können und das feste alkalische Reagens ferner mit der dorthin geleiteten Flüssigkeit benetzen und so ein vorbenetztes Reagens bilden, wobei das vorbenetzte Reagens die Kammer (20) über einen Fluidauslass (100) verlässt, der mit einer Leitung (50) verbunden ist, die einen Eduktor (60) umfasst;
- Strömenlassen eines Stroms durch die Leitung (50) und dadurch Erzeugen einer Saugwirkung durch den Eduktor (60) und damit Saugen des vorbenetzten Reagens aus der Vorbenetzungskammer (20) für das feste Einsatzmaterial in Richtung des Fluidauslasses (100) der Kammer und Mischen des vorbenetzten Reagens mit dem Strom und dadurch Ausbilden einer Aufschlämmung oder Lösung des alkalischen Reagens, die den Eduktor (60) verlässt; Lenken von zumindest einem Teil der Aufschlämmung oder Lösung des alkalischen Reagens, die den Eduktor (60) verlässt, zu einer Einheit zur Behandlung von wässriger Flüssigkeit oder Gas, über einen Kreislauf (210) in Fluidverbindung mit der Behandlungseinheit, und Entfernen von zumindest einem Teil der Verunreinigung aus der wässrigen Flüssigkeit oder dem Gas in der Behandlungseinheit.

2.  Verfahren nach Anspruch 1, wobei das feste alkalische Reagens ein Carbonatmaterial, ein Bicarbonatmaterial, ein Sesquicarbonatmaterial, ein Calciumphosphatmaterial oder Kombinationen daraus umfasst, vorzugsweise Natriumcarbonat, Natriumbicarbonat, Natriumsesquicarbonat, ein Material, das Hydroxylapatit und/oder Brushit umfasst, oder Kombinationen daraus umfasst.

3.  Verfahren nach Anspruch 1 oder 2, wobei das alkalische Reagens zur Entfernung von $SO_x$ aus Wasser geeignet ist und wobei das feste alkalische Reagens ein Carbonatmaterial, ein Bicarbonatmaterial, ein Sesquicarbonatmaterial, ein Calciumphosphatmaterial oder Kombinationen daraus umfasst, vorzugsweise Natriumcarbonat, Natriumbicarbonat, Natriumsesquicarbonat oder Kombinationen daraus umfasst.

4.  Verfahren nach Anspruch 1, 2 oder 3, wobei das alkalische Reagens zur Entfernung von organischen Substanzen, Nichtmetallen und/oder Metallen aus wässriger Flüssigkeit geeignet ist und wobei das feste alkalische Reagens ein Calciumphosphatmaterial umfasst, vorzugsweise ein Material umfasst, das Hydroxylapatit und/oder Brushit umfasst, bevorzugter einen calciumdefizienten Hydroxylapatit mit einem Ca/P-Verhältnis von unter 1,67 und/oder ein Hydroxylapatit-Verbundmaterial umfasst, das Aktivkohle und einen Hydroxylapatit umfasst, beispielsweise einen calciumdefizienten Hydroxylapatit mit einem Ca/P-Verhältnis von unter 1,67.

5.  Verfahren nach einem der vorhergehenden Ansprüche, wobei die Behandlungseinheit einen Nasswäscher, insbesondere einen Nasswäscher für Schiffsabgase umfasst, der in einer Gestaltung mit geschlossenem Kreislauf oder Hybridgestaltung betrieben wird.

6.  Verfahren nach einem der vorhergehenden Ansprüche, wobei die Flüssigkeit, die in die Vorbenetzungskammer fließt, oder der Strom, der durch die Leitung strömt, oder beide Süßwasser, Salzwasser oder eine wässrige Lösung umfassen.

7.  Verfahren nach einem der vorhergehenden Ansprüche, das an Bord eines Seeschiffes durchgeführt wird.

8.  Verfahren nach einem der vorhergehenden Ansprüche, wobei die Flüssigkeit zum Vorbenetzen des festen alkalischen Reagens, der Strom, der in die Leitung (50) hineinfließt, oder beide aus Folgendem stammen:

    einem Nasswäscher, vorzugsweise einem Nasswäscher für Schiffsabgase, der in einer Gestaltung mit geschlossenem Kreislauf oder Hybridgestaltung betrieben wird,
    vorzugsweise zumindest einen Teil von Waschwasser umfasst, der erneut zu einem Nasswäscher, vorzugsweise einem Nasswäscher für Schiffsabgase, der in einer Gestaltung mit geschlossenem Kreislauf oder Hybridgestaltung betrieben wird, geleitet wird und von dort kommt und wobei die Aufschlämmung oder die Lösung,
    die den Eduktor verlässt, zu dem Nasswäscher gelenkt wird, oder
    einem Schlammdeckenkontaktreaktor oder einem Fließbettreaktor, der vorzugsweise zumindest einen Teil einer Flüssigkeit umfasst, der erneut zu dem Reaktor geleitet wird und von dort kommt und wobei die Aufschlämmung oder die Lösung, die den Eduktor verlässt, zu dem Reaktor gelenkt wird.

9.  Verfahren nach einem der vorhergehenden Ansprüche, wobei die Flüssigkeitsseitenströme, die in die Vorbenetzungskammer (30) für festes Einsatzmaterial hineinfließt, einen Durchfluss von ungefähr 10 Vol.-% bis 30 Vol.-% des Durchflusses des Stroms, der in die Leitung hineinfließt, aufweisen.

10. Verfahren nach einem der vorhergehenden Ansprüche, das in einem System durchgeführt wird, das Folgendes umfasst:

- eine Vorbenetzungskammer (20) für festes Einsatzmaterial, die zwei oder mehr Flüssigkeitseinlässe (40) umfasst; einen kegelstumpfförmigen Abschnitt (24) mit einer Innenwand, einem Fluidauslass (100) und einer Mittelachse (22), wobei der kegelstumpfförmige Abschnitt (24) und der Flüssigkeitsauslass (100) dieselbe Mittelachse (22) der Vorbenetzungskammer (20) für festes Einsatzmaterial aufweisen;
- eine Feststoffzuleitung (30), von der ein Abschnitt zur Kammer (20) betrachtet innen liegt und deren inneres Ende eine Achse aufweist, die nach der Mittelachse (22) der Vorbenetzungskammer (20) für festes Einsatzmaterial ausgerichtet ist, und
- eine Leitung (50), die einen flüssigkeitsbetriebenen Eduktor (60) umfasst, wobei die Leitung (50) über den Fluidauslass (100) der Kammer (30), der mit einer Ansaugöffnung des flüssigkeitsbetriebenen Eduktors (60) verbunden ist, hydraulisch mit dem kegelstumpfförmigen Abschnitt (24) der Kammer (20) verbunden ist, wobei die Leitung (50) hydraulisch mit dem Kreislauf (210) einer Behandlungseinheit, beispielsweise einem Nasswäscher, vorzugsweise einem Nasswäscher für Schiffsabgase, oder einem Schlammwasserbehandlungsreaktor, verbunden ist.

11. Verfahren nach einem der vorhergehenden Ansprüche, wobei die zwei oder mehr Flüssigkeitseinlässe (40) ein offenes Rohr, vorzugsweise ein abgeschrägtes Rohr mit einem offenen Ende, umfassen, das die Flüssigkeit zur Innenwand des kegelstumpfförmigen Abschnitts (24) der Kammer lenkt.

12. Verfahren nach einem der vorhergehenden Ansprüche, wobei die zwei oder mehr Flüssigkeitseinlässe keine Zerstäuber oder Düsen aufweisen, damit keine Flüssigkeit zum Feststoffzuleitungsrohr gelenkt wird und verhindert wird, dass ein Abschnitt des Abschnitts des Feststoffzuleitungsrohrs, der sich von der Vorbenetzungskammer (20) aus betrachtet innen befindet, benetzt wird.

13. Verfahren nach einem der vorhergehenden Ansprüche, wobei die Flüssigkeitsseitenströme spiralförmig abwärts tangential auf eine Innenwand des kegelstumpfförmigen Abschnitts (24) der Kammer fließen, wodurch ein Wirbel in Richtung des Fluidauslasses (100) der Vorbenetzungskammer (20) erzeugt wird.

14. Verfahren nach Anspruch 1, wobei das Gas aus einem Abgas stammt, insbesondere aus einem Schiffsmotoren-Abgas stammt.

15. Verfahren nach Anspruch 1, wobei die Verunreinigung $SO_x$, organische Substanzen, Nichtmetalle

und/oder Metalle umfasst.

**Revendications**

1. Procédé pour éliminer au moins un contaminant d'une liqueur aqueuse ou d'un gaz, comprenant :

    - préparation d'une solution ou suspension d'un réactif alcalin solide en introduisant un réactif alcalin solide dans une chambre de pré-mouillage (20) par l'intermédiaire d'un tuyau d'alimentation en solide (30), de préférence positionné au sommet de cette chambre ;
    - fourniture d'un liquide par au moins deux flux latéraux liquides, chacun par une entrée de liquide (40) positionnée sur une paroi latérale de la chambre (20) pour permettre aux flux latéraux liquides de laver une paroi interne d'une section tronconique (24) de la chambre (20) et de s'écouler vers le bas en direction d'une sortie de fluide (100) de la chambre (20) et d'humidifier davantage le réactif alcalin solide avec le liquide fourni, formant ainsi un réactif pré-mouillé, dans lequel le réactif pré-humidifié sort de la chambre (20) par une sortie de fluide (100) qui est reliée à un conduit (50) comprenant un éjecteur (60) ;
    - écoulement d'un flux à travers le conduit (50) créant ainsi une aspiration par l'éjecteur (60) pour aspirer le réactif pré-mouillé hors de la chambre de pré-mouillage d'alimentation en solide (20) vers la sortie de fluide de la chambre (100) et mélange du réactif pré-mouillé avec le flux pour former une suspension ou solution du réactif alcalin sortant de l'éjecteur (60) ; direction d'au moins une partie de la suspension ou solution du réactif alcalin sortant de l'éjecteur (60) vers une unité de traitement de liqueur aqueuse ou de gaz, via une boucle de circulation (210) en communication fluidique avec l'unité de traitement, et élimination d'au moins une partie du contaminant de la liqueur aqueuse ou du gaz dans l'unité de traitement.

2. Procédé selon la revendication 1, dans lequel le réactif alcalin solide comprend un matériau de carbonate, un matériau de bicarbonate, un matériau de sesquicarbonate, un matériau de phosphate de calcium, ou des combinaisons de ceux-ci, de préférence comprend du carbonate de sodium, du bicarbonate de sodium, du sesquicarbonate de sodium, un matériau comprenant de l'hydroxyapatite et/ou de la brushite, ou des combinaisons de ceux-ci.

3. Procédé selon la revendication 1 ou 2, dans lequel le réactif alcalin est approprié pour l'élimination de $SO_x$ d'eau, et dans lequel le réactif alcalin solide comprend un matériau carbonate, un matériau bicarbonate, un matériau sesquicarbonate ou des combinaisons de ceux-ci, de préférence comprend du carbonate de sodium, du bicarbonate de sodium, du sesquicarbonate de sodium ou des combinaisons de ceux-ci.

4. Procédé selon la revendication 1, 2 ou 3, dans lequel le réactif alcalin est approprié pour l'élimination de composés organiques, de non-métaux et/ou de métaux d'une liqueur aqueuse, et dans lequel le réactif alcalin solide comprend un matériau de phosphate de calcium, de préférence comprend un matériau comprenant de l'hydroxyapatite et/ou de la brushite, plus préférablement comprend une hydroxyapatite déficiente en calcium ayant un rapport Ca/P inférieur à 1,67 et/ou un composite d'hydroxyapatite comprenant du carbone activé et une hydroxyapatite, tel qu'une hydroxyapatite déficiente en calcium avec un rapport Ca/P inférieur à 1,67.

5. Procédé selon l'une quelconque des revendications précédentes, dans lequel l'unité de traitement comprend un épurateur humide, de préférence un épurateur humide de gaz d'échappement marin, exploité en boucle fermée ou en configuration hybride.

6. Procédé selon l'une quelconque des revendications précédentes, dans lequel le liquide s'écoulant dans la chambre de pré-mouillage, ou le flux s'écoulant à travers le conduit, ou les deux comprennent de l'eau douce, de l'eau de mer ou une solution aqueuse.

7. Procédé selon l'une quelconque des revendications précédentes, mis en œuvre à bord d'un navire maritime.

8. Procédé selon l'une quelconque des revendications précédentes, dans lequel le liquide pour le pré-mouillage du réactif alcalin solide, le flux pénétrant dans le conduit (50), ou les deux proviennent de :

un épurateur humide, de préférence un épurateur humide de gaz d'échappement marin, exploité en boucle fermée ou en configuration hybride, comprenant de préférence au moins une partie d'une eau de lavage recirculant vers et depuis un épurateur humide, de préférence un épurateur humide de gaz d'échappement marin, exploité en boucle fermée ou en configuration hybride, et dans lequel la suspension ou solution sortant de l'éjecteur est dirigée vers l'épurateur humide, ou un réacteur de contact avec un matelas de boues ou un réacteur à lit fluidisé, qui comprend de préférence au moins une partie d'une liqueur recirculant vers et depuis le réacteur, et dans lequel la suspension sortant de l'éjecteur est dirigée vers le réacteur.

9. Procédé selon l'une quelconque des revendications précédentes, dans lequel les flux latéraux liquides entrant dans la chambre de pré-mouillage d'alimentation en solide (30) ont un débit d'environ 10 % en volume à 30 % en volume du débit du flux entrant dans le conduit.

10. Procédé selon l'une quelconque des revendications précédentes, qui est mis en œuvre dans un système comprenant :

- une chambre de pré-mouillage d'alimentation en solide (20) comprenant au moins deux entrées de liquide (40) ; une section tronconique (24) ayant une paroi interne, une sortie de fluide (100) et un axe central (22), la section tronconique (24) et la sortie de fluide (100) ayant le même axe central (22) de la chambre de pré-mouillage d'alimentation en solide (20) ;
- une conduite d'alimentation en solide (30) dont une partie est interne à la chambre (20) et dont l'extrémité interne a un axe aligné avec l'axe central (22) de la chambre de pré-mouillage d'alimentation en solide (20), et
- une conduite (50) comprenant un éjecteur entraîné par un liquide (60), ladite conduite (50) étant reliée hydrauliquement à la section tronconique (24) de la chambre (20) par l'intermédiaire de la sortie de fluide (100) de la chambre (30) qui est reliée à une ouverture de succion de l'éjecteur entraîné par un liquide (60), ladite conduite (50) étant reliée hydrauliquement à la boucle de circulation (210) d'une unité de traitement, telle qu'un épurateur humide, de préférence un épurateur humide de gaz d'échappement marin, ou un réacteur de traitement d'eau en suspension.

11. Procédé selon l'une quelconque des revendications précédentes, dans lequel les au moins deux entrées de liquide (40) comprennent un tuyau à extrémité ouverte, de préférence un tuyau incliné à extrémité ouverte, qui dirige le liquide vers la paroi interne de la section tronconique (24) de la chambre.

12. Procédé selon l'une quelconque des revendications précédentes, dans lequel les au moins deux entrées de liquide excluent des pulvérisations ou des buses pour éviter que le liquide ne soit dirigé vers le tuyau d'alimentation en solide et éviter de mouiller une partie de la partie de tuyau d'alimentation en solide qui est interne à la chambre de pré-mouillage (20).

13. Procédé selon l'une quelconque des revendications précédentes, dans lequel les flux latéraux liquides s'écoulent tangentiellement sur une paroi interne de la section tronconique (24) de la chambre d'une manière en spirale vers le bas, formant ainsi un tourbillon vers la sortie de fluide (100) de la chambre de pré-mouillage (20)

14. Procédé selon la revendication 1, dans lequel le gaz provient d'un gaz d'échappement, en particulier d'un gaz d'échappement d'un moteur marin.

15. Procédé selon la revendication 1, dans lequel le contaminant comprend $SO_x$, des composés organiques, des non-métaux et/ou des métaux.

Fig. 1

Fig. 2a

Fig. 2b

Fig. 3

Fig. 4

**Fig. 5**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 19158786
- WO 2015173437 A
- US 20170080401 A

**Non-patent literature cited in the description**

- *MARPOL*, January 2015